# EUROPEAN PATENT SPECIFICATION

(11) **EP 1 566 252 B1**
(45) Date of publication and mention of the grant of the patent: **11.08.2010**
(21) Application number: 04003638.6
(22) Date of filing: 18.02.2004
(51) Int. Cl.: B29C 43/02, B29C 45/14, B29C 43/40, B29C 51/32

(54) **Package shell cover layer and its manufacturing process**
Deckschicht für schalenförmige Verpackungen und Verfahren zu deren Herstellung
Couche de recouvrement pour emballage en forme de coquille et procédé pour sa fabrication

(43) Date of publication of application: 24.08.2005
(73) Proprietor: TAIYI Precision Tech Corp., Taipei County (TW)
(72) Inventor: HUANG, Pao Chuan c/o Taiyi Precision Tech Corp., Taipei County (TW)
(74) Representative: Viering, Jentschura & Partner

(56) References cited:
- WO-A-02/20241
- US-A- 5 599 608
- US-B1- 6 398 897
- US-B2- 6 634 291

## Description

### BACKGROUND OF THE INVENTION

### 1. Field of the Invention:

The present invention relates to a process of making a package shell cover layer

### 2. Description of the Related Art:

The design of the package shell of an electric appliance is one of the important factors to attract consumers to buy the electric appliance. The color design of the package shell of an electric appliance may be formed on the package shell by transfer-printing. However, the color design made by transfer-printing wears quickly with the use of the electric appliance. In order to eliminate this problem, an improved method is developed. According to this improved method, a thin sheet plastic base material is prepared and then printed with a color design, and then the printed thin sheet plastic base material is put in a hot press mold and molded into a semi-finished product that has a cover layer main body with the printed color design and a peripheral material extended around the border area of the cover layer main body. The semi-finished product is then well cut to separate the cover layer main body from the peripheral material. However, this method still has drawbacks according to the preamble of claim 1. During hot press molding, the cohesive force of the thin sheet base material is changed, resulting in cracking of the printed color design about the border area of the cover layer main body. After cutting of the cover layer main body from the peripheral material, the cut border edge of the cover layer main body tends to curve inwards. When the edge-curved cover layer main body is put in the mold of an injection molding machine and then molded on the package shell of an apparatus, the molded package shell may become defective.

A conventional process of the initially mentioned type is, for example, known from US-A-5 599 608.

WO-A-02 20241 discloses a method of producing an in-mold decorated part, wherein a substantially flat substrate is printed or decorated with graphics by various printing methods, and wherein the flat substrate is placed into a forming tool and formed by a pressure medium acting on the substrate to force the substrate against the surface of the forming tool insert, and wherein the substrate may be pattern-cut, e.g. by die cutting, along cut-lines to remove excess material and define the perimeter of the final product.

### SUMMARY OF THE INVENTION

The present invention has been accomplished under the circumstances in view. It is therefore the main object of the present invention to provide a process of making a package shell cover layer, which improves the sense of appearance of the package shell and reinforces the toughness of the package shell. It is another object of the present invention to provide a process of making a package shell cover layer, which prevents cracking of the printed color design and curving of the cut border edge. To this end, a package shell cover layer processing procedure according to claim 1 is provided. Further embodiments of the invention are described in the dependent claims.

### BRIEF DESCRIPTION OF THE DRAWINGS

FIG. 1 is a block diagram showing a package shell cover layer processing flow according to the present invention.
FIG. 2 is a schematic drawing showing a color design printed on a thin sheet base material prepared according to the present invention.
FIG. 3 is a schematic sectional view showing the molding of a printed thin sheet base material in a hot press mold according to the present invention.
FIG. 4 is a schematic drawing showing a semi-finished cover layer manufactured according to the present invention.
FIG. 5 is an elevational view of a cover layer obtained according to the present invention.

### DETAILED DESCRIPTION OF THE PREFERRED EMBODIMENT

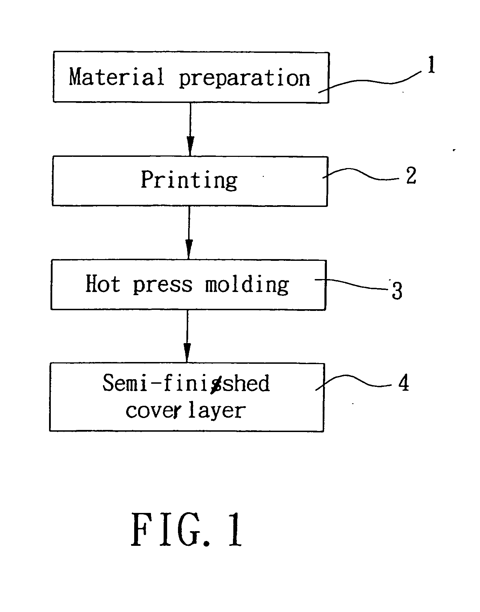

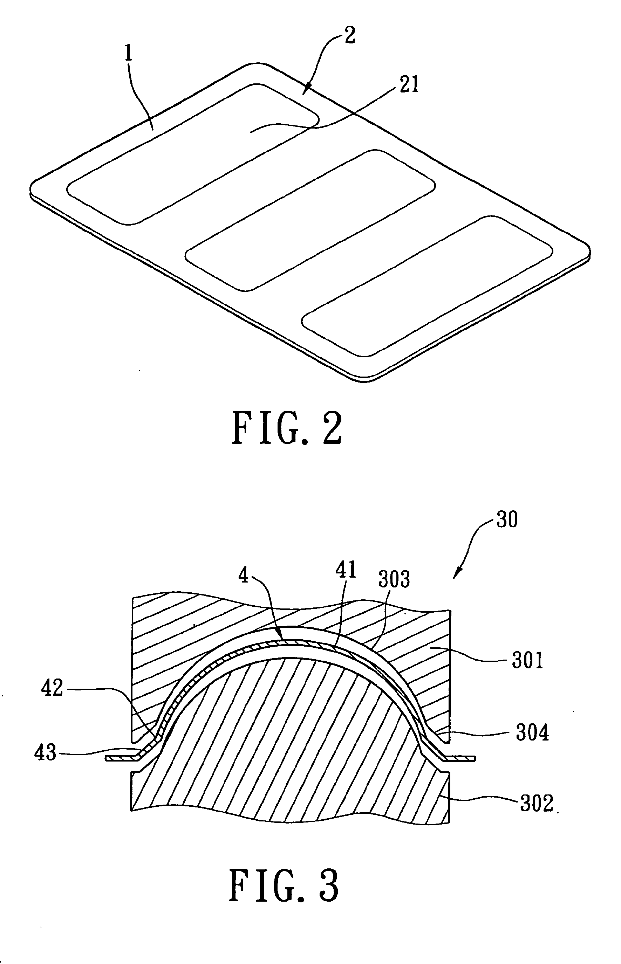

Referring to FIGS. 1, 2, and 3, a package shell cover layer is a layer carrying a color design to improve the sense of beauty of the package shell and to reinforce the toughness of the package shell.

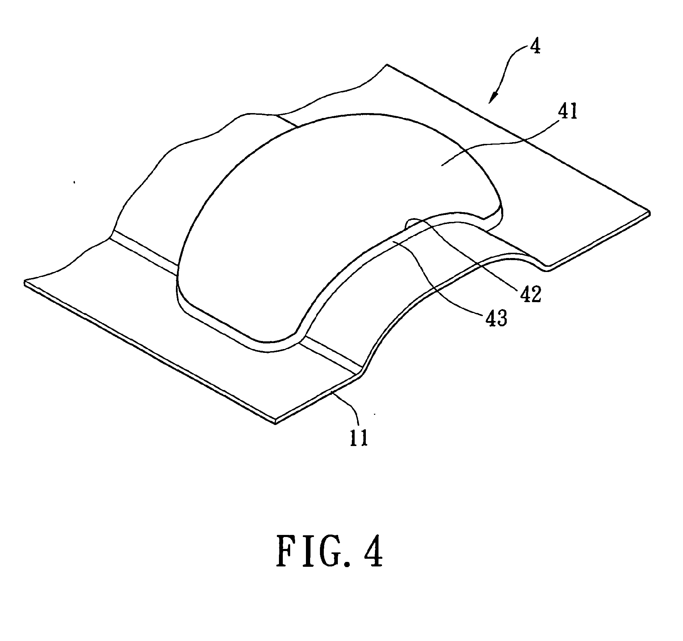

The processing process of making the aforesaid package shell cover layer includes the first step of material preparation **1** where a thin sheet base material (indicated also by numeral sign **1**) is prepared, the second step of printing **2** where a printing machine is used to print a color design (for example the logo of a company) **21** on the surface of the prepared thin sheet base material **1**, the third step of hot press molding **3** where the printed thin sheet base material **1** is put in the male die **301** and female die **302** of a hot press mold **30**, and the fourth step of removal of semi-finished cover layer **4** where a semi-finished cover layer 4 is obtained and removed from the hot press mold **30**. (see FIG. 4).

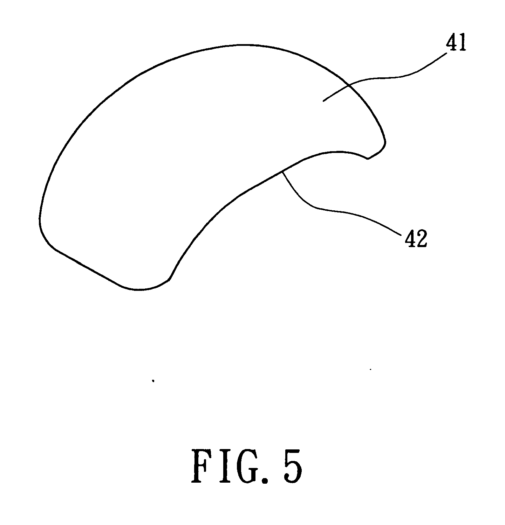

Referring to FIGS. 4 and 5, the semi-finished cover layer **4** thus obtained comprises a cover layer main body **41**, a peripheral material **11** formed of a part of the thin sheet base material **1**, and an extension portion **43** connected between the border **42** of the cover layer main body **41** and the peripheral material **11**. The extension portion **43** slopes (or curves) downwards from the border **42** of the cover layer main body **41** toward the peripheral material **11**. The semi-finished cover layer **4** is then properly cut along the border **42** of the cover layer main body **41** to separate the cover layer main body **41** from the peripheral material **11**. The severed cover layer main body (finished cover layer) **41** is then put in the mold of an injection molding machine and then molded on the package shell of an apparatus. When molded on the package shell of an apparatus, the cover layer main body **41** improves the sense of appearance of the apparatus and reinforces the toughness of the package shell of the apparatus.

The cavity of the hot press mold **30** comprises a cover layer molding area **303** adapted to mold the middle part of the thin sheet base material **1** into the aforesaid cover layer main body **41**, and an extension portion molding area **304** adapted to mold a part of the thin sheet base material **1** into the aforesaid extension portion **43** around the border **42** of the cover layer main body **41**. During hot press molding, the cohesive force of the thin sheet base material **1** remains unchanged, therefore cutting the border area **42** of the cover layer main body **41** from the peripheral material **11** does not cause cracking of the printing around the border area **42** of the cover layer main body **41** or inward turning of the cut border edge of the cover layer main body **41**. When put in the mold of the injection molding machine, the cover layer main body **41** can be molded on the package shell of an apparatus smoothly and successfully. Because of high yielding rate, the manufacturing cost is relatively reduced.

Although a particular embodiment of the invention has been described in detail for purposes of illustration, various modifications and enhancements may be made without departing from the scope of the invention. Accordingly, the invention is not to be limited except as by the appended claims.

## Claims

1. A process of making a package shell cover layer comprising the steps of:
a) preparing a thin sheet base material (**1**);
b) printing (**2**) a color design (**21**) on said thin sheet base material (**1**); and
c) putting the printed thin sheet base material (**1**) in a hot press mold (**30**), and then molding the printed thin sheet base material (**1**) into a semi-finished product (**4**) having a cover layer main body (**41**) formed by a cover molding area (**303**) of the hot press mold (**30**), a peripheral material (**11**) extending around the cover layer main body (**41**), and an extension portion (**43**) connected between said the extension portion (43) extending from a border line (42) between said cover layer main body (41) and said extension portion (43) to a further border line between the extension portion (43) and the peripheral material (11) cover layer main body (**41**) and said peripheral material (**11**) and formed by an extension portion molding area (304) of the hot press mold (**30**), **characterized by** cutting the semi-finished product (4) along the border line (**42**) between said cover layer main body (**41**) and said extension portion (43) to separate said cover layer main body (**41**) from said extension portion (**43**) and said peripheral material (**11**) after removal of said semi-finished product (**4**) from said hot press mold (**30**) the extension portion (43) being inclined with regard to the main body (41), so that cracking of the printed design and curving of the cut edge of the border (42) is prevented.

2. The process of making a package shell cover layer as claimed in claim 1, wherein said hot press mold (**30**) is comprised of a male die (**301**) and a female die (**302**), defining therein a cavity having the cover layer molding area (**303**) adapted to mold a middle part of said thin sheet base material (**1**) into said cover layer main body (**41**), and the extension portion molding area (**304**) adapted to mold a part of said thin sheet base material (**1**) into said extension portion (**43**).

3. The process of making a package shell cover layer as claimed in claim 1, wherein said hot press mold (**30**) is comprised of a single die defining therein a cavity having the cover layer molding area (**303**) adapted to mold a middle part of said thin sheet base material (**1**) into said cover layer main body (**41**), and the extension portion molding area (**304**) adapted to mold a part of said thin sheet base material (**1**) into said extension portion (**43**).

## Patentansprüche

1. Ein Verfahren zum Herstellen einer Verpackungsschalen-Deckschicht, aufweisend die Schritte:
a) Herrichten eines Dünnlagen-Basismaterials (1),
b)Drucken (2) eines Farbdesigns (21) auf das Dünnlagen-Basismaterial (1) und
c) Legen des bedruckten Dünnlagen-Basismaterials (1) in eine Heißpressform (30), und dann Formen des bedruckten Dünnlagen-Basismaterials (1) in ein halbfertiges Produkt (4) mit einem Deckschicht-Hauptkörper (41), welcher geformt wird von einem Deckschicht-Formbereich (303) der Heißpressform (30), einem Umfangsmaterial (11), welches sich um den Deckschicht-Hauptkörper (41) herum erstreckt, und einem Ausdehnungsabschnitt (43), der zwischen dem Deckschicht-Hauptkörper (41) und dem Umfangsmaterial (11) verbunden ist und der geformt wird von einem Ausdehnungsabschnitt-Formbereich (304) der Heißpressform (30), wobei sich der Ausdehnungsabschnitt (43) von einer Randlinie (42) zwischen dem Deckschicht-Hauptkörper (41) und dem Ausdehnungsabschnitt (43) zu einer weiteren Randlinie zwischen dem Ausdehnungsabschnitt (43) und dem Umfangsmaterial (11) hin erstreckt, **gekennzeichnet durch** Schneiden des halbfertigen Produkts (4) entlang der Randlinie (42) zwischen dem Deckschicht-Hauptkörper (41) und dem Ausdehnungsabschnitt (43), um den Deckschicht-Hauptkörper (41) von dem Ausdehnungsabschnitt (43) sowie dem Umfangsmaterial (11) nach Entfernung des halbfertigen Produkts (4) von der Heißpressform (30) zu trennen, wobei der Ausdehnungsabschnitt (43) bezüglich des Hauptkörpers (41) derart geneigt ist, dass ein Reißen des gedruckten Designs und ein Krümmen der Schnittkante des Randes (42) vermieden wird.

2. Das Verfahren zum Herstellen einer Verpackungsschalen-Deckschicht wie in Anspruch 1 beansprucht, wobei die Heißpressform (30) eine männliche Form (301) und eine weibliche Form (302) aufweist, welche darin eine Kavität definieren, welche den Deckschicht-Formbereich (303), welcher angepasst ist, einen Mittelteil des Dünnlagen-Basismaterials (1) in den Deckschicht-Hauptkörper (41) zu formen, sowie den Ausdehnungsabschnitt-Formbereich (304) aufweist, welcher angepasst ist, einen Teil des Dünnlagen-Basismaterials (1) in den Ausdehnungsabschnitt (43) zu formen.

3. Das Verfahren zum Herstellen einer Verpackungsschalen-Deckschicht wie in Anspruch 1 beansprucht, wobei die Heißpressform (30) eine einzige Form aufweist, welche darin eine Kavität definiert, welche den Deckschicht-Formbereich (303), welcher angepasst ist, einen Mittelteil des Dünnlagen-Basismaterials (1) in den Deckschicht-Hauptkörper (41) zu formen, und den Ausdehnungsabschnitt-Formbereich (304) hat, welcher angepasst ist, einen Teil des Dünnlagen-Basismaterials (1) in den Ausdehnungsabschnitt (43) zu formen.

## Revendications

1. Procédé de fabrication d'une couche de revêtement de coque d'emballage comprenant les étapes consistant à :
a) préparer un matériau de base en feuille mince (1) ;
b) imprimer (2) un motif en couleur (21) sur ledit matériau de base en feuille mince (1) ; et
c) placer le matériau de base en feuille mince (1) imprimé dans un moule de compression à chaud (30), et ensuite mouler le matériau de base en feuille mince (1) imprimé en un produit semi-fini (4) ayant un corps principal (41) de couche de revêtement formé par une zone de moulage (303) du moule de compression à chaud (30) moulant la couche de revêtement, un matériau périphérique (11) s'étendant autour du corps principal (41) de la couche de revêtement, et une portion d'extension (43) raccordée entre ledit corps principal (41) de la couche de revêtement et ledit matériau périphérique (11) et formée par une zone du moule de compression à chaud (30) moulant la portion d'extension (304) la portion d'extension (43) s'étendant d'une limite (42) entre ledit corps principal (41) de la couche de revêtement et ladite portion d'extension (43) à une autre limite entre la portion d'extension (43) et le matériau périphérique (11), **caractérisé par** la découpe du produit semi-fini (4) le long de la limite (42) entre ledit corps principal (41) de la couche de revêtement et ladite portion d'extension (43) afin de séparer ledit corps principal (41) de la couche de revêtement de ladite portion d'extension (43) et dudit matériau périphérique (11) après retrait dudit produit semi-fini (4) dudit moule de compression à chaud (30), la portion d'extension (43) étant inclinée par rapport au corps principal (41) afin d'empêcher le fendillement du motif imprimé et la courbure du bord coupé de la limite (42).

2. Procédé de réalisation d'une couche de revêtement de coque d'emballage selon la revendication 1, dans lequel ledit moule de compression à chaud (30) est composé d'une matrice mâle (301) et d'une matrice femelle (302), y définissant une cavité dont la zone de moulage pour la couche de revêtement (303) adaptée pour mouler une partie centrale dudit matériau de base en feuille mince (1) dans ledit corps principal (41) de la couche de revêtement, et de la zone de moulage (304) de la portion d'extension adaptée pour mouler une partie dudit matériau de base en feuille mince (1) dans ladite portion d'extension (43).

3. Procédé de préparation d'une couche de revêtement de coque d'emballage selon la revendication 1, dans lequel le moule de compression à chaud (30) est constitué d'une seule matrice qui y définit une cavité dont la zone moulant la couche de revêtement (303) est adaptée pour mouler une partie centrale dudit matériau de base en feuille mince (1) dans ledit corps principal (41) de la couche de revêtement, et la zone moulant la portion d'extension (304) est adaptée pour mouler une partie dudit matériau de base en feuille mince (1) dans ladite portion d'extension (43).
